# EUROPEAN PATENT APPLICATION

(11) **EP 2 017 826 A2**
(43) Date of publication of application: **21.01.2009**
(21) Application number: 08252149.3
(22) Date of filing: 20.06.2008
(51) Int. Cl.: G10K 11/172

(54) **An acoustic panel**

(30) Priority: 12.07.2007 GB 0713526
(71) Applicant: Rolls-Royce plc, 65 Buckingham Gate London SW1E 6AT (GB)
(72) Inventor: Bagnall, Adam Macgregor, Alderwasley, Derbyshire DE56 2RA (GB)
(74) Representative: Gunn, Michael Alan

(57) **Abstract**

An acoustic panel (320) for a fan casing of a gas turbine engine includes one or more Helmholtz resonators (333) to absorb acoustic energy propagated upstream from the fan. By arranging that the periodic air flow out of the resonators has some axial momentum, by inclining the passages (334) that from the necks of the resonators in a downstream direction, some of the energy in this air flow can be realised as a useful pressure rise in the direction of the air flow into the fan, rather than a pressure drop as in known acoustic panels.

## Description

This invention relates to ducts carrying flowing gases, and more particularly to arrangements for reducing noise in such ducts. It is envisaged that the invention will be particularly suitable for use in the fan casings of gas turbine engines, though it may equally well be used in other fields.

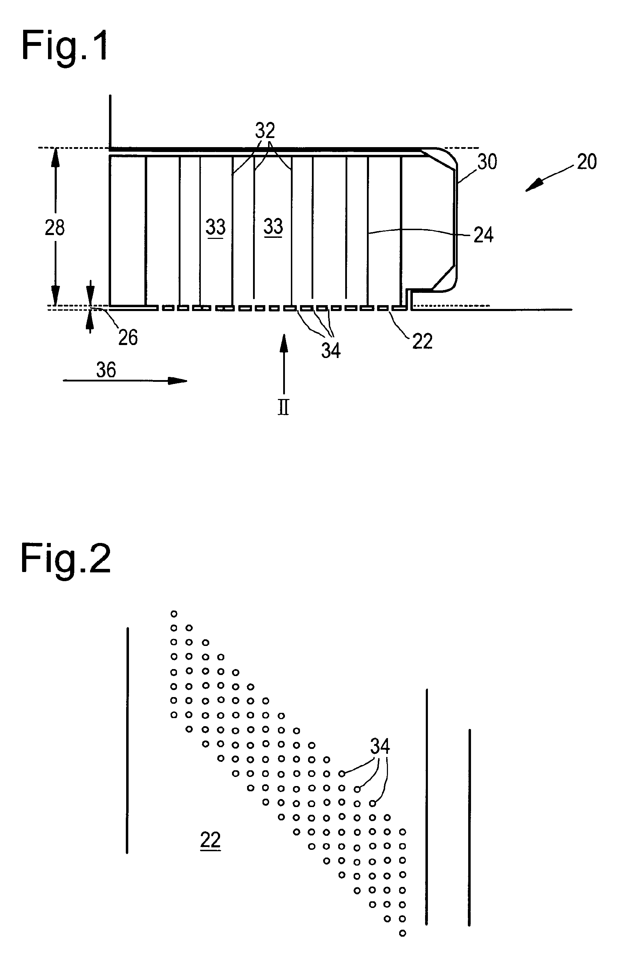

Existing aero engines may incorporate an acoustic treatment in the fan case upstream of the fan to absorb some of the acoustic energy generated by the fan blades. Typically this acoustic treatment consists of a rigid facing sheet, which is perforated with holes perpendicular to the surface and is supported by a honeycomb or pocketed material. The acoustic treatment may also be used to damp an aero-acoustic vibration of the fan blades, commonly called flutter. An example of such a treatment is shown in Figures 1 and 2, and it is described in more detail later.

Such acoustic treatments operate in a widely varying pressure field, close to and upstream of the fan. During operation of the engine, the varying static pressure field causes air to flow alternately in and out of the holes of the perforated sheet. Due to the pressure variation, the velocity of this air flow into and out of the holes can be significant compared with the velocity of the boundary layer flow entering the fan. The momentum of the air ejected from the holes is perpendicular to the mainstream flow and results in a pressure loss in the air flow into the fan. The non-optimum dissipation of energy into the air stream adversely affects the properties of the boundary layer of the mainstream air flow entering the fan. This, in turn, has a detrimental effect on the fan system's performance, specifically its stability and efficiency.

It would therefore be desirable to have an acoustic treatment for a fan case that can absorb the acoustic energy generated by the fan blades, without causing a detrimental pressure drop in the boundary layer of the air flow into the fan, with the consequent adverse effects on the fan system performance. It is an objective of this invention to provide such an acoustic treatment.

According to the present invention, there is provided an acoustic panel and an arrangement for absorbing noise energy as claimed in the independent claims.

An embodiment of the invention will now be described, by way of example only, making reference to the accompanying drawings in which:
Figure 1 is a cross-sectional view of an acoustic treatment of known type;
Figure 2 is a view in the direction II in Figure 1;
Figure 3 is a cross-sectional view of a first embodiment of an acoustic treatment according to the invention;
Figure 4 is a view in the direction IV in Figure 3;
Figure 5 is a cross-sectional view of a second embodiment of an acoustic treatment according to the invention;
Figure 6 is a view in the direction VI in Figure 5;
Figure 7 is a cross-sectional view of a third embodiment of an acoustic treatment according to the invention;
Figure 8 is a view in the direction VIII in Figure 7;
Figure 9 is a cross-sectional view of a fourth embodiment of an acoustic treatment according to the invention; and
Figure 10 is a cross-sectional view of a fifth embodiment of an acoustic treatment according to the invention.

Referring first to Figures 1 and 2, an acoustic panel shown generally at 20 comprises a perforated face sheet 22 covering a panel of honeycomb material 24. The thickness 26 of the face sheet 22 is about 1 millimetre, and the depth 28 of the honeycomb material 24 is about 40 millimetres. In use, a number of such panels 20 are mounted in an annular fan casing 30 of a gas turbine engine. The details of this mounting are not important to the understanding of the invention.

Cell walls 32 of the honeycomb material 24 define cells 33, which in use are orientated in a generally radial direction. The face sheet 22 is perforated by a large number of circular holes 34, arranged in a regular pattern over substantially the whole area of the face sheet 22 (in Figure 2, only a representative sample of the holes 34 is shown). The diameter of the holes 34 is about 1 millimetre. The holes 34 are perpendicular to the surface of the face sheet 22.

In use, a mainstream air flow flows through the annular duct defined by the acoustic panels 20, in the direction shown by the arrow 36. The intake of the gas turbine engine is upstream of the acoustic panels 20 and the fan is downstream of the acoustic panels 20. At the sides of the duct, near to the face sheets 22 of the acoustic panels 20, a boundary layer flow will form, the behaviour of which will be understood by a skilled person. The velocity of the air flow in the boundary layer will be somewhat lower than the velocity away from the sides of the duct.

In use, the static pressure near to the face sheet 22 of a given acoustic panel 20 is subjected to a wide periodic variation, as the fan blades rotate and pass by the panel 20 in turn. With each pressure rise, air will flow from the duct through the holes 34 into the cells 33, and with each pressure fall air will flow out of the cells 33 through the holes 34 and back into the duct. The dimensions of the cells 33 are selected, at the design stage of the acoustic panel 20, to allow each cell 33 to act as a Helmholtz resonator. The resonant frequencies of the cells 33 are designed to absorb some of the energy from the pressure variations, thereby reducing the noise transmitted upstream from the fan.

Due to the magnitude of the pressure variations, the velocity of the air flow into and out of the holes 34 can be significant compared to the velocity of the boundary layer flow entering the fan. The momentum of this fluid ejected from the holes is perpendicular to the mainstream flow 36 and will be realised as a pressure loss in the direction 36 of the air flow into the fan. This non-optimum dissipation of energy into the air stream adversely affects the properties of the boundary layer of the mainstream air flow into the fan. This, in turn, has a detrimental effect on the fan system's performance - specifically its stability and efficiency - compared to a fan system whose annulus wall does not have the pressure loss associated with the acoustic panels.

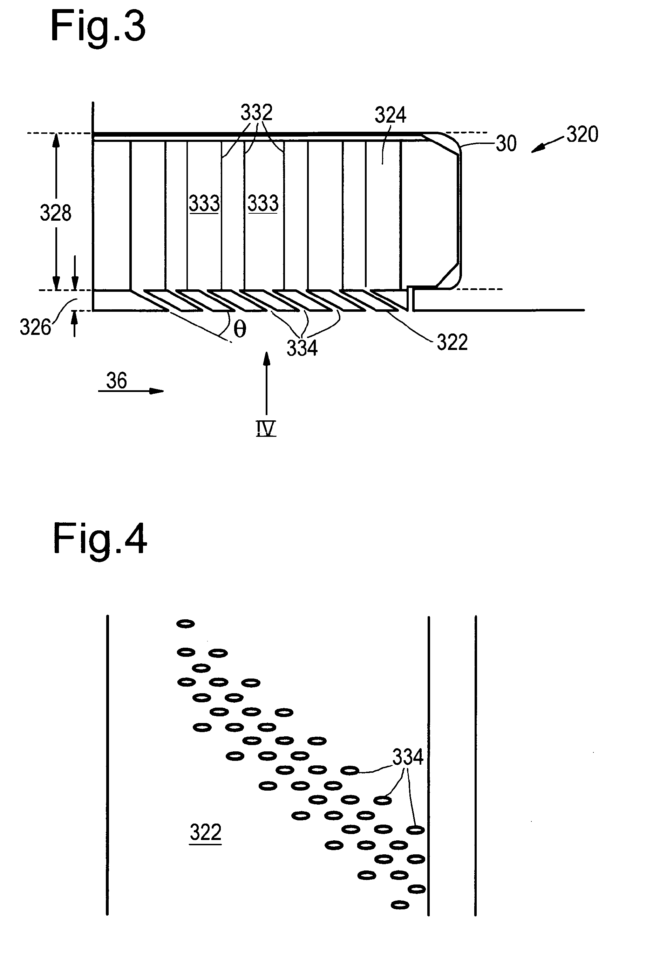

Figures 3 and 4 show a first embodiment of an acoustic panel 320 according to the invention. The panel 320 is mounted in use in a fan casing 30 of a gas turbine engine, as for the prior art acoustic panel shown in Figure 1.

A panel of honeycomb material 324, whose depth 328 is about 40 millimetres, comprises cell walls 332 defining cells 333. The honeycomb material 324 is covered by a face sheet 322, whose thickness 326 is about 5 millimetres. The face sheet 322 is perforated by a large number of circular holes 334 inclined at an angle θ of about 30 degrees to the surface of the face sheet 322. The diameter of the holes 334 is about 1 millimetre.

In use, a mainstream air flow flows through the annular duct defined by the acoustic panels 320, in the direction shown by the arrow 36. As in the prior art embodiment of Figure 1, air will flow through the holes 334 into and out of the cells 333 as the duct static pressure rises and falls. As before, the dimensions of the cells 333 are selected, at the design stage of the acoustic panel 320, to allow each cell 333 to act as a Helmholtz resonator.

Because the holes 334 are inclined in a downstream direction, the air flowing out of the cells 333 into the boundary layer of the mainstream air flow into the fan has some axial momentum. In this way some of the energy associated with the velocity of the air exiting the holes 334 is realised as a pressure rise, rather than being dissipated as a pressure loss, in the direction 36 of air flow into the fan.

This exchange of momentum as a useful pressure rise will only occur as the air flows out of the cells 333 of the acoustic panel 320: as the air alternately enters the cells 333 the air is removed from the mainstream flow without a pressure loss to the mainstream flow.

In this respect the invention can be considered as a rectifier whereby some of the acoustic energy, having been converted into kinetic energy associated with the movement of air into and out of the holes 334, is then recovered as a pressure rise in a direction useful to the boundary layer of the mainstream flow into the fan.

The increase in momentum of the boundary layer flow will improve the pressure recovery of the air entering the fan with an improvement to the engine cycle. In addition, there will be a reduction of the blockage associated with the boundary layer entering the fan and so increase the fan's flow capacity with additional benefits to the engine cycle. Furthermore, the increase in momentum of the boundary layer fluid should improve the tip flow of the fan, with additional benefits to the aerodynamic performance of the fan especially in terms of efficiency and stability, including fan stall and fan flutter.

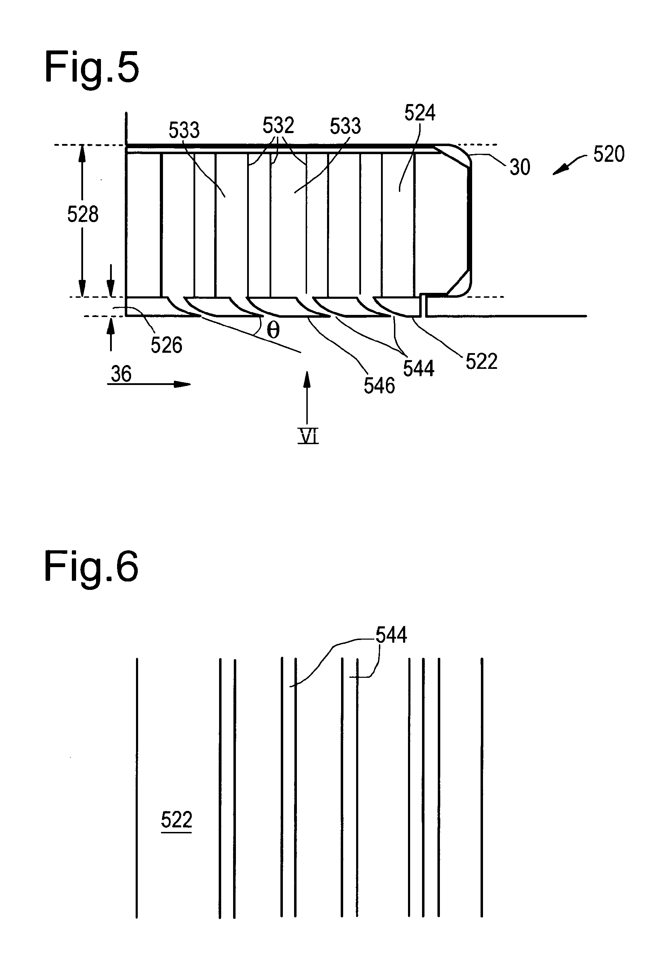

Figures 5 and 6 show a second embodiment of an acoustic panel 520 according to the invention. As before, the acoustic panel 520 is mounted in use in a fan casing 30. The acoustic panel 520 comprises a layer 524 of honeycomb material about 40 millimetres deep, with cell walls 532 defining cells 533.

In this embodiment, the honeycomb material 524 is covered by a face sheet 522 which comprises a number of slots 544. The thickness 526 of the face sheet is about 5 millimetres. In this embodiment the slots 544 extend across the whole width of each panel 520, but in other embodiments they may be non-continuous. The part of the slot 544 adjacent to the surface 546 of the face sheet 522 is inclined downstream at an angle θ of about 30 degrees.

It will be appreciated that this arrangement will operate in use in the same way as the previous embodiment of Figures 3 and 4, such that the air flowing out of the cells 533 through the slots 544 into the boundary layer of the mainstream air flow has some axial momentum, which will be realised as a pressure rise in the direction 36 of air flow into the fan.

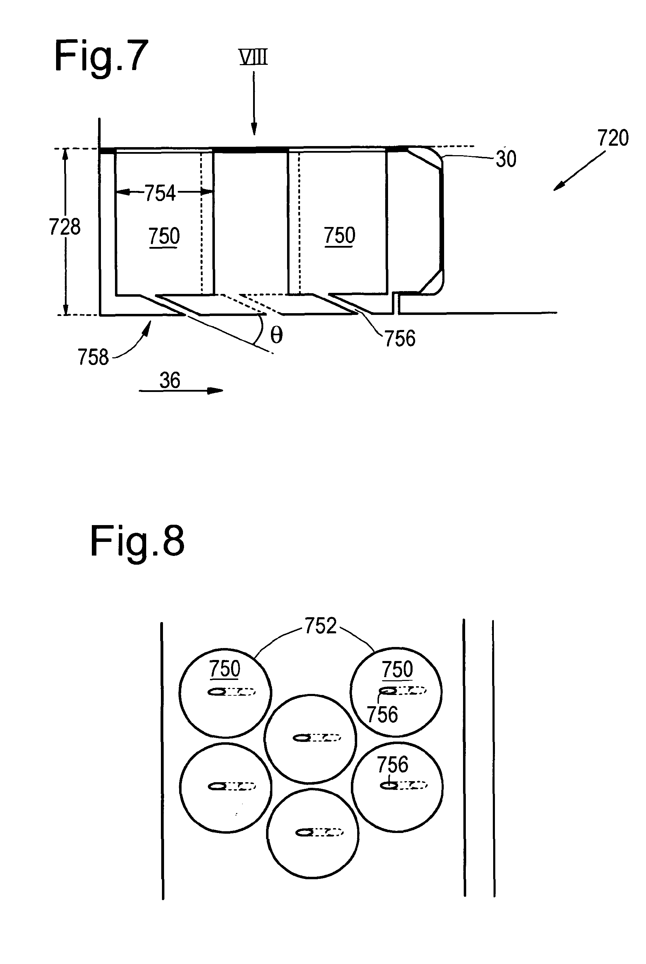

Figures 7 and 8 show a third embodiment of an acoustic panel 720 according to the invention. As in the previous embodiments, the acoustic panel 720 is mounted in use in a fan casing 30.

The acoustic panel 720 comprises a number of discrete cylindrical chambers 750 defined by walls 752. Each chamber has a diameter 754 of about 25 millimetres. Each chamber is in fluid communication with the duct, in which flows the mainstream air flow 36, via a circular tube 756 with a diameter of about 1 millimetre. The tubes are inclined downstream at an angle θ of about 30 degrees. The overall length 728 (in the radial direction) of the chambers 750 and tubes 756 is about 40 millimetres. A surface 758 provides a smooth air-washed surface in the duct.

Each chamber 750 will act, in use, as a Helmholtz resonator, with the tube 756 as the resonator neck. As in previous embodiments, the resonant frequency of the chamber 750 will be designed, by suitable choice of the dimensions of the chambers 750 and tubes 756, to deliver the desired attenuation of the acoustic energy generated by the fan.

As in the previous embodiments, the air flowing out of the chambers 750 in use, through the tubes 756 and into the boundary layer of the mainstream air flow, will have some axial momentum, which will be realised as a pressure rise in the direction 36 of air flow into the fan.

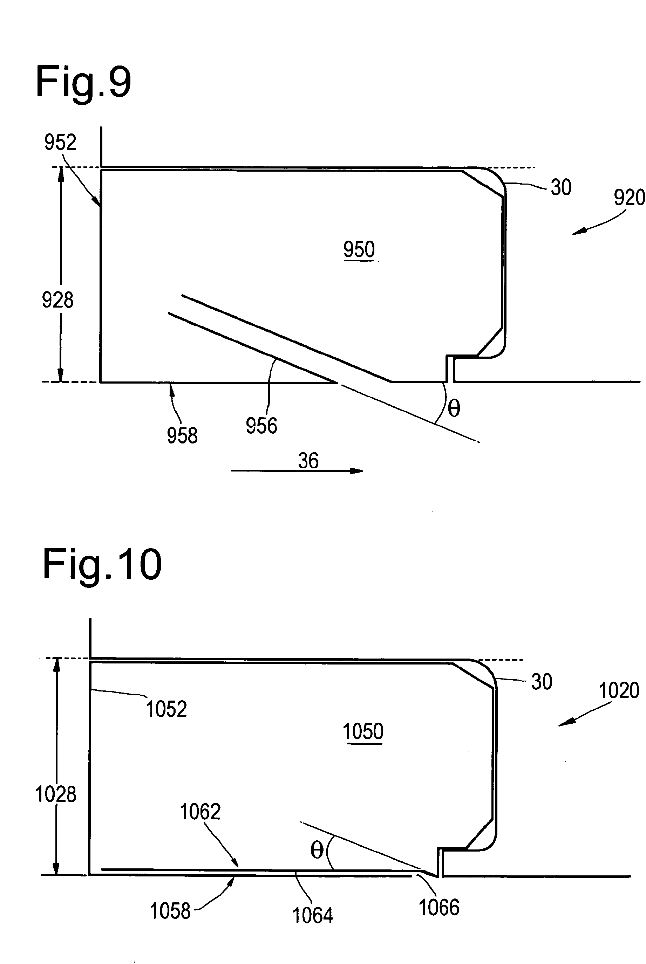

Figure 9 shows a fourth embodiment of the invention, in which the acoustic panel 920 comprises a fabricated chamber 950 defined by walls 952. The depth 928 of the chamber is about 40 millimetres. In use, a number of such chambers would be arranged around an annular fan casing 30. In this embodiment, the inner wall 958 of the chamber 950 forms the air-washed surface of the duct, but the skilled person will appreciate that other arrangements are possible in which an additional component provides the air-washed surface. A tube 956, inclined at an angle θ of about 30 degrees to the surface 958, extends from the surface 958 into the chamber 950. The diameter of the tube 956 is about 7.5 millimetres.

As in previous embodiments, the chamber 950 forms a Helmholtz resonator, and its shape and size are chosen to optimise the attenuation of acoustic energy.

Once again, because of the downstream inclination of the tube 956, air flowing out of the chamber 950 into the boundary layer of the mainstream air flow will have some axial momentum, which will be realised as a pressure rise in the direction 36 of air flow into the fan.

Figure 10 shows a fifth embodiment of the invention. As in the embodiment of Figure 9, the acoustic panel 1020 comprises a fabricated chamber 1050 defined by walls 1052. The depth 1028 of the chamber is about 40 millimetres. In use, a number of such chambers would be arranged around an annular fan casing 30.

The chamber 1050 has a double wall 1058, 1062, defining a passage 1064 which acts in use as the neck of the Helmholtz resonator formed by the chamber 1050. The slot 1066 at the outer end of this passage 1064 is inclined at an angle θ of about 30 degrees. Because of the inclination of this slot 1066, it will be appreciated that (as in the previous embodiments) the air flowing out of the chamber 1050, through the passage 1064 and into the boundary layer will have some axial momentum, which will be realised as a pressure rise in the direction 36 of air flow into the fan.

The invention thus provides an acoustic panel for a fan casing of a gas turbine engine in which one or more Helmholtz resonators are used to absorb acoustic energy propagated upstream from the fan. By arranging that the periodic air flow out of the resonators has some axial momentum, some of the energy in this air flow can be realised as a useful pressure rise in the direction of the air flow into the fan, rather than a pressure drop as in known acoustic panels.

It will be appreciated by the skilled person that the underlying principle of this invention may be applied in many other ways, besides those set out in the specific embodiments described above.

In any of the embodiments, the sizes and shapes of the cells or chambers may be changed to suit particular circumstances. The arrangement or packing of the chambers, for example in the embodiment of Figures 7 and 8, may be any convenient arrangement. To facilitate this, or for any other reason, the chambers may be of shapes other than cylindrical. The thickness of the face sheet may be less or greater than in the embodiments described.

In the embodiments of Figures 3, 4, 5 and 6 a pocketed material (in which the volume outside the air-washed surface is divided into a plurality of pockets or smaller volumes or chambers) may be used in place of the honeycomb material.

The sizes and positions of the perforations in the face sheet, in the embodiment of Figures 3 and 4, may be different from that shown. Specifically, the pattern of the holes may be chosen to align the holes with the cells of the honeycomb material. Similarly, the sizes and positions of the slots in the embodiment of Figures 5 and 6 may be varied, and the slots may be continuous or non-continuous around the circumference of the duct. The passages adjacent to the slots may be curved (as shown in the embodiment of Figures 5 and 6) or straight, and may or may not taper towards the slots.

The angle of inclination of the holes, slots or tubes in the various embodiments may be varied to provide the optimum pressure recovery in the air flow. It may be desirable to use different angles of inclination in different axial or circumferential positions, and the angle of inclination may include a circumferential component.

The use of the invention has been described in the context of an acoustic panel for the fan casing of a gas turbine engine. A skilled person will appreciate that the underlying principle of the invention may advantageously be employed in other fields in which a gas flows through a duct and is subjected to pressure fluctuations. Some specific examples are set out, but these are not intended to be limiting.

The invention may be employed in the intake of a gas turbine engine, or in the bypass or exhaust ducting of such an engine.

The invention may be employed in ducts of domestic or commercial air conditioning or ventilation systems, and may be used upstream or downstream of a fan in such a system. It may also be used in air conditioning or ventilation systems in land, sea or air vehicles.

The invention may be used in the intake, exhaust or other ducting of a reciprocating engine.

## Claims

1. An acoustic panel (320) for a duct, the duct having an upstream end and a downstream end, the panel comprising a cavity (333) and further comprising a passage (334) in fluid communication with the cavity and having an opening in fluid communication with the duct in use, the panel **characterised in that** at least the opening of the passage is inclined towards the downstream end of the duct so that fluid flow out of the passage has a component of momentum in the downstream direction.

2. An acoustic panel as in claim 1, in which the opening of the passage (334) is inclined towards the downstream end at an angle of about 30 degrees.

3. An acoustic panel as in claim 1 or claim 2, in which the cavity (333) behaves in use as a Helmholtz resonator.

4. An acoustic panel as in any one of the preceding claims, and comprising a plurality of cavities and at least one passage in fluid communication with each cavity.

5. An acoustic panel as in claim 4, and comprising a pocketed or honeycomb material covered by a perforated sheet, so that the pockets or the cells of the honeycomb define the cavities and the perforations define the passages.

6. An acoustic panel as in claim 5, in which the depth of the honeycomb material is about 40 millimetres.

7. An acoustic panel as in claim 4, and comprising a plurality of discrete chambers (750) covered by a perforated sheet, so that the chambers define the cavities and the perforations define the passages.

8. An acoustic panel as in any one of claims 5 to 7, in which the perforated sheet has a thickness of about 5 millimetres.

9. An acoustic panel as in any one of the preceding claims, in which the passages are holes of generally circular cross-section (334).

10. An acoustic panel as in claim 9, in which the holes have a diameter of about 1 millimetre.

11. An acoustic panel as in any one of claims 1 to 4, in which the passages are slots (544).

12. An acoustic panel as in claim 11, in which the width of the slots is about 1 millimetre.

13. An acoustic panel as in any one of claims 1 to 4, and comprising at least one fabricated chamber (950), the passage being formed integrally with the chamber.

14. An acoustic panel as in any preceding claim, in which in use part of the acoustic panel (1020) defines part of a boundary (1058) of the duct (1064).

15. An acoustic panel as in any preceding claim, in which the duct is a fan casing of a gas turbine engine.

16. An acoustic panel substantially as described in this specification, with reference to and as shown in Figures 3 to 10 of the accompanying drawings.

17. A gas turbine engine incorporating an acoustic panel as in any one of the preceding claims.
